**Europäisches Patentamt**

**European Patent Office**

**Office européen des brevets**

(11) Veröffentlichungsnummer: **0 074 531**
**A1**

# (12) EUROPÄISCHE PATENTANMELDUNG

(21) Anmeldenummer: **82107780.7**

(22) Anmeldetag: **25.08.82**

(51) Int. Cl.³: **F 02 M 69/00**
**F 02 B 29/04**

(30) Priorität: **10.09.81 DE 3135791**

(43) Veröffentlichungstag der Anmeldung:
**23.03.83 Patentblatt 83/12**

(84) Benannte Vertragsstaaten:
**DE FR GB IT**

(71) Anmelder: **ROBERT BOSCH GMBH**
**Postfach 50**
**D-7000 Stuttgart 1(DE)**

(72) Erfinder: **Seebald, Lutz**
**Carl-Orff-Strasse 8**
**D-7141 Möglingen(DE)**

(54) Kraftstoffeinspritzanlage.

(57) Es wird eine Kraftstoffeinspritzanlage für Brennkraftmaschinen mit Aufladung vorgeschlagen, die zur Zumessung einer der angesaugten Luftmenge angepaßten Kraftstoffmenge und zur Regelung des Kraftstoff-Luft-Gemisches in Abhängigkeit von Betriebskenngrößen der Brennkraftmaschine dient. Die Kraftstoffeinspritzanlage umfaßt stromaufwärts einer Drosselklappe (7) in einem Saugrohrabschnitt (6) einen Verdichter (5) und in Einzelsaugrohren (8) angeordnete Haupteinspritzventile (14) zur Einspritzung von Kraftstoff unmittelbar vor die Einlaßventile der einzelnen Zylinder der Brennkraftmaschine (4). Die Kraftstoffzumessung erfolgt in Abhängigkeit von Betriebskenngrößen der Brennkraftmaschine, wie beispielsweise Drehzahl (22), Luftmenge (23), Drosselklappenstellung (24) und Temperatur (25). Stromaufwärts des Verdichters (5) ist am Saugrohrabschnitt (2) ein Zusatzeinspritzventil (27) angeordnet, über das in bestimmten Betriebszuständen der Brennkraftmaschine Kraftstoff eingespritzt wird, wodurch es zu einer Kühlung der angesaugten Luft und des Verdichters (5) kommt mit der Folge einer Verbesserung des Füllungsgrades der Brennkraftmaschine und daraus sich ergebender höherer Leistung, niedrigen Verbrauches und geringeren Anteilen giftiger Abgasbestandteile.

ROBERT BOSCH GMBH, 7000 Stuttgart 1


Kraftstoffeinspritzanlage


Stand der Technik

Die Erfindung geht aus von einer Kraftstoffeinspritzanlage
nach der Gattung des Hauptanspruchs. Es ist schon eine
Kraftstoffeinspritzanlage bekannt, bei der die Einspritzung stromabwärts des Turboladers erfolgt. Hierbei ergibt
sich der Nachteil, daß die Lufttemperaturen vor dem Eintritt in die Zylinder der Brennkraftmaschine auf zum Teil
über 100 °C steigen, was eine geringere Füllung und einen
schlechteren Wirkungsgrad der Brennkraftmaschine zur Folge
hat.


Vorteile der Erfindung

Die erfindungsgemäße Kraftstoffeinspritzanlage mit den
kennzeichnenden Merkmalen des Hauptanspruchs hat demgegenüber den Vorteil, daß der stromaufwärts des Verdichters
eingespritzte Kraftstoff infolge seines Energiebedarfes
bei der Verdampfung zu einer Kühlung der angesaugten Luft
und des Verdichters führt, wodurch neben einer Verlängerung der Lebensdauer des Verdichters infolge geringeren
Verschleißes ein höherer Füllungsgrad der Brennkraftmaschine und damit eine Leistungssteigerung erzielt wird.

...

Als weitere Vorteile ergeben sich ein früherer Zündzeitpunkt mit der Folge eines niederen Kraftstoffverbrauches und ein besserer Wirkungsgrad, der eine Verringerung schädlicher Bestandteile im Abgas bewirkt.

Durch die in den Unteransprüchen aufgeführten Maßnahmen sind vorteilhafte Weiterbildungen und Verbesserungen der im Hauptanspruch angegebenen Kraftstoffeinspritzanlage möglich.

Zeichnung

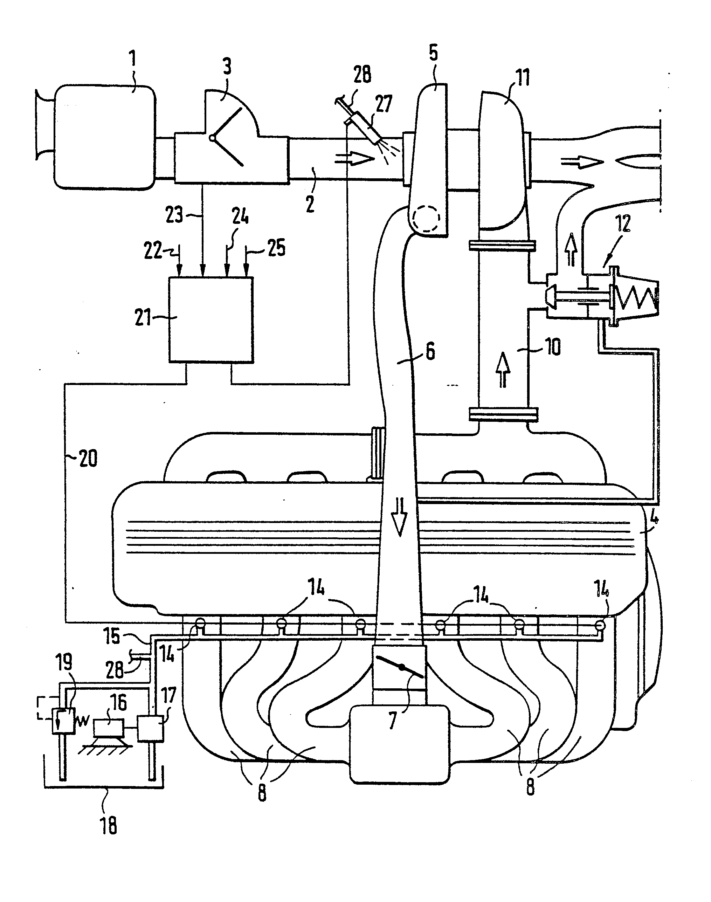

Ein Ausführungsbeispiel der Erfindung ist in der Zeichnung vereinfacht dargestellt und in der nachfolgenden Beschreibung näher erläutert.

Beschreibung des Ausführungsbeispieles

Bei der in der Zeichnung dargestellten Kraftstoffeinspritzanlage strömt die Verbrennungsluft durch einen Luftfilter 1 in einen Saugrohrabschnitt 2, in dem ein Luftmeßorgan 3 bekannter Bauart, beispielsweise ein Hitzdrahtluftmassenmesser oder ein Stauklappenluftmengenmesser, angeordnet ist. Stromabwärts des Luftmeßorgans 3 ist ein die von einer Brennkraftmaschine 4 angesaugte Luftmenge komprimierender Verdichter 5, beispielsweise ein Turbolader bekannter Bauart angeordnet, stromabwärts dessen die komprimierte Luft in einen Saugrohrabschnitt 6 mit einer Drosselklappe 7 gelangt. Stromabwärts der Drosselklappe 7 zweigen von dem Saugrohrabschnitt 6 Einzelsaugrohre 8 ab, die zu den einzelnen Zylindern der Brennkraftmaschine 4 führen. Bei der dargestellten Brennkraftmaschine 4 soll es sich um eine 6-Zylinder-Brennkraftmaschine handeln. Mit 10 ist eine

. . .

Abgasleitung bezeichnet, die zu einer Abgas-Turbine 11
führt, die mit dem Verdichter 5 starr gekoppelt ist und
durch das erhitzte und stark komprimierte Abgas angetrieben wird. Ein Bypassventil 12 dient dazu, beim Erreichen
des maximal zulässigen Ladedruckes in dem Saugrohrabschnitt
6 zu öffnen und einen Teil des Abgases an der Abgas-Turbine 11 vorbeiströmen zu lassen.

An jedem Einzelsaugrohr 8 ist ein Haupteinspritzventil 14
angeordnet, über das Kraftstoff unmittelbar vor das Einlaßventil jedes Zylinders eingespritzt werden kann. Die
Haupteinspritzventile 14 stehen mit einer Kraftstoffverteilerleitung 15 in Verbindung, in die durch eine von einem Elektromotor 16 angetriebene Kraftstoffpumpe 17 Kraftstoff aus einem Kraftstoffbehälter 18 gefördert wird. Ein
Druckregelventil 19 sorgt für einen konstanten Kraftstoffdruck in der Kraftstoffverteilerleitung 15. Bei dem beispielsweise dargestellten Ausführungsbeispiel einer Kraftstoffeinspritzanlage soll es sich um eine elektronische
Kraftstoffeinspritzanlage handeln mit als Elektromagnetventile ausgebildeten Haupteinspritzventilen 14. Die Ansteuerung der Haupteinspritzventile 14 erfolgt über eine
Ansteuerleitung 20 durch ein elektronisches Steuergerät
21 bekannter Bauart in Abhängigkeit von Betriebskenngrössen der Brennkraftmaschine wie Drehzahl 22, Luftmenge 23,
Drosselklappenstellung 24, Temperatur 25 und anderen.

Die Komprimierung der angesaugten Luft durch den Verdichter 5 führt zum Teil zu Lufttemperaturen von über 100 $^{\circ}$C,
was zu einer geringeren Füllung der Motorzylinder und zu
einer Verschlechterung des Wirkungsgrades der Brennkraftmaschine einerseits führt und andererseits die Gefahr eines höheren Verschleißes des Verdichters 5 und damit ei-

...

ner Verringerung der Lebensdauer in sich birgt. Erfindungsgemäß ist deshalb stromaufwärts des Verdichters 5
am Saugrohrabschnitt 2 ein Zusatzeinspritzventil 27 angeordnet, das über eine Zweigleitung 28 mit der Kraftstoffverteilerleitung 15 in Verbindung steht. Durch die
Verdampfung des über das Zusatzeinspritzventil 27 stromaufwärts des Verdichters 5 eingespritzten Kraftstoffes
wird der angesaugten Luft Wärme entzogen, wodurch es nicht
nur zu einer Verringerung der Verdichtertemperatur, sondern auch zu einer Verringerung der Temperatur der den
Zylindern der Brennkraftmaschine 4 zugeführten Luft kommt,
wodurch sich der Füllungsgrad der einzelnen Zylinder erhöht, was eine Leistungssteigerung der Brennkraftmaschine
zur Folge hat. Daraus ergibt sich weiterhin ein früherer
Zündzeitpunkt und ein besserer Wirkungsgrad, wodurch der
Kraftstoffverbrauch und die Anteile giftiger Abgasbestandteile verringert werden. Außerdem kann durch die erfindungsgemäße Einspritzung über das Zusatzeinspritzventil 27 stromaufwärts des Verdichters ein sonst üblicher Ladeluftkühler
entfallen oder zumindest verkleinert werden. Das Zusatzeinspritzventil 27 kann ebenfalls elektromagnetisch ausgebildet durch das elektronische Steuergerät 21 ansteuerbar sein. Dabei kann die Ansteuerung des Zusatzeinspritzventiles 27 vorteilhafterweise derart erfolgen, daß unterhalb der Betriebstemperatur der Brennkraftmaschine von
ca. 80 $^{\circ}$C keine Einspritzung über das Zusatzeinspritzventil 27 erfolgt, das Zusatzeinspritzventil also geschlossen
ist. Außerdem ist es zweckmäßig in Betriebsbereichen
des Leerlaufs und der unteren Teillast der Brennkraftmaschine ebenfalls eine Einspritzung über das Zusatzeinspritzventil 27 zu unterbinden. Erst bei höherer Teillast
und Vollast ist die erfindungsgemäße Einspritzung von
Kraftstoff über das Zusatzeinspritzventil 27 zur Kühlung

. . .

der angesaugten Luftmenge und des Verdichters 5 besonders zweckmäßig, wobei die über das Zusatzeinspritzventil 27 eingespritzte Kraftstoffmenge in Abhängigkeit von der Drehzahl 22 und/oder der Last 24 erfolgen sollte. Bei Einspritzung über das Zusatzeinspritzventil 27 sollte die über die Haupteinspritzventile 14 jeweils eingespritzte Kraftstoffmenge anteilig entsprechend der über das Zusatzeinspritzventil 27 eingespritzten Kraftstoffmenge reduziert werden.

Die erfindungsgemäße Ausgestaltung einer Kraftstoffeinspritzanlage mit einem Zusatzeinspritzventil 27 zur Einspritzung von Kraftstoff stromaufwärts des Verdichters ist nicht beschränkt auf die Verwendung bei einer elektronischen Kraftstoffeinspritzanlage. Vielmehr kann auch in äquivalenter Ausgestaltung bei einer mechanischen Kraftstoffeinspritzanlage ein Zusatzeinspritzventil vorgesehen sein, das unter den geschilderten Bedingungen stromaufwärts des Verdichters 5 in den Saugrohrabschnitt 2 Kraftstoff einspritzt, wobei in entsprechender Weise die Einspritzmengen über die Haupteinspritzventile 14 reduziert werden.

R. 7264
3.8.1981 Kh/Wl

ROBERT BOSCH GMBH, 7000 Stuttgart 1

Ansprüche

1. Kraftstoffeinspritzanlage für gemischverdichtende fremdgezündete Brennkraftmaschinen mit einem im Saugrohr angeordneten Verdichter (Turbolader) und Haupteinspritzventilen zur Einspritzung von Kraftstoff in das Saugrohr stromabwärts des Verdichters, dadurch gekennzeichnet, daß stromaufwärts des Verdichters (5) am Saugrohr (2) ein Zusatzeinspritzventil (27) angeordnet ist.

2. Kraftstoffeinspritzanlage nach Anspruch 1, dadurch gekennzeichnet, daß das Zusatzeinspritzventil (27) unterhalb der Betriebstemperatur der Brennkraftmaschine gesperrt ist.

3. Kraftstoffeinspritzanlage nach Anspruch 1 oder 2, dadurch gekennzeichnet, daß die über das Zusatzeinspritzventil (27) eingespritzte Kraftstoffmenge drehzahlabhängig änderbar ist.

4. Kraftstoffeinspritzanlage nach Anspruch 3, dadurch gekennzeichnet, daß die über das Zusatzeinspritzventil (27) eingespritzte Kraftstoffmenge in Abhängigkeit von der Drosselklappenstellung (24) änderbar ist.

0074531

| Europäisches Patentamt | **EUROPÄISCHER RECHERCHENBERICHT** | **0074531** Nummer der Anmeldung |
| | | EP 82 10 7780 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | F 02 M 69/00 |
| X | DE-A-2 737 849 (VOLKSWAGENWERK) <br> * Seite 3, Absatz 3 - Seite 8, Absatz 2; Figur 1 * | 1,3,4 | F 02 B 29/04 |
| | --- | | |
| A | FR-A-1 079 660 (DAIMLER) <br> * Spalte 2, Zeile 28 - Spalte 3, Zeile 14; Figur 1 * | 1,3 | |
| | --- | | |
| A | DE-A-2 825 945 (WIESER) | | |
| | ----- | | |

| | |
|---|---|
| | RECHERCHIERTE SACHGEBIETE (Int. Cl. ³) |
| | F 02 M <br> F 02 B <br> F 02 D |

Der vorliegende Recherchenbericht wurde für alle Patentansprüche erstellt.

| Recherchenort <br> DEN HAAG | Abschlußdatum der Recherche <br> 22-11-1982 | Prüfer <br> SCHMID R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82